# EUROPÄISCHE PATENTSCHRIFT

(11) **EP 4 190 635 B1**
(45) Veröffentlichungstag und Bekanntmachung des Hinweises auf die Patenterteilung: **01.05.2024**
(21) Anmeldenummer: 21212273.3
(22) Anmeldetag: 03.12.2021
(51) Int. Cl.: B60Q 1/068

(54) **BELEUCHTUNGSVORRICHTUNG FÜR EIN KRAFTFAHRZEUG MIT VERSTELLEINRICHTUNG ZUR GLEICHZEITIGEN VERSTELLUNG VON LICHTMODULEN**
LIGHTING DEVICE FOR A MOTOR VEHICLE WITH ADJUSTING DEVICE FOR THE SIMULTANEOUS ADJUSTMENT OF LIGHT MODULES
DISPOSITIF D'ÉCLAIRAGE POUR UN VÉHICULE AUTOMOBILE AVEC DISPOSITIF DE RÉGLAGE SIMULTANÉ DE MODULES LUMINEUX

(43) Veröffentlichungstag der Anmeldung: 07.06.2023
(73) Patentinhaber: ZKW Group GmbH, 3250 Wieselburg (AT)
(72) Erfinder: Staffenberger, Walter, 3643 Maria Laach (AT); Pritzl, Leopold, 3254 Bergland (AT)
(74) Vertreter: Patentanwaltskanzlei Matschnig & Forsthuber OG

(56) Entgegenhaltungen:
- EP-A1- 2 394 850
- EP-A1- 3 616 993
- DE-A1-102018 120 836
- JP-A- H03 138 801
- JP-A- 2012 201 186
- US-A1- 2005 002 201
- US-A1- 2016 159 271

## Beschreibung

Die Erfindung betrifft eine Beleuchtungsvorrichtung umfassend ein erstes und ein zweites Lichtmodul, wobei das erste Lichtmodul um eine erste Verschwenkachse und das zweite Lichtmodul um eine zweite Verschwenkachse verschwenkbar gelagert ist, sowie einer Verstelleinrichtung zur gleichzeitigen Verstellung der beiden Lichtmodule.

Lichtmodule einer Beleuchtungsvorrichtung, z.B. eines Kraftfahrzeugscheinwerfers, dienen zur Erzeugung von Lichtverteilungen oder Teillichtverteilungen, wie z.B. von Abblendlichtoder Fernlichtverteilungen, etc.

Es ist notwendig, diese Lichtmodule hinsichtlich ihrer Grundposition in vertikaler und/oder horizontaler Richtung einstellen zu können, sodass diese in die korrekte Richtung ausgerichtet sind. Diese Einstellung der Grundposition erfolgt häufig manuell.

Zum Verstellen der Lichtmodule sind diese beispielsweise um horizontale Achsen verschwenkbar, sodass diese in vertikaler Richtung (d.h. Auf oder Ab) geschwenkt werden können, wodurch die Leuchtweite eingestellt werden kann, und/oder um vertikale Achsen verschwenkbar, sodass diese in horizontaler Richtung (d.h. nach Links oder nach Rechts) geschwenkt werden können, wodurch die seitliche Leuchtrichtung eingestellt werden kann.

Die DE 10 2018 120836 A1 zeigt eine Beleuchtungsvorrichtung mit einer Verstelleinrichtung zum Verstellen von zwei um jeweils eine Verschwenkachse verschwenkbaren Lichtmodulen, wobei die Verstelleinrichtung unter anderem drei zusammenwirkende Drehelemente umfasst. Weiteres Verstelleinrichtungen zur Verstellung eines Lichtmoduls in einem Kraftfahrzeugscheinwerfer sind aus der US 2005/002201 A1 und der EP 3 616 993 A1 bekannt.

Es ist eine Aufgabe der Erfindung, eine Beleuchtungsvorrichtung mit einer Verstelleinrichtung bereitzustellen, mit welcher zwei Lichtmodule der Beleuchtungsvorrichtung gemeinsam verstellt werden können.

Diese Aufgabe wird mit einer Beleuchtungsvorrichtung mit den Merkmalen des unabhängigen Anspruchs 1 gelöst.

Es treibt somit das Kegelrad das erste Tellerrad und dieses wiederum, gegenläufig, das zweite Tellerrad an, und das erste und zweite Tellerrad bewegen die ihnen zugeordneten Verstellwellen linear in entgegengesetzte Richtung, wodurch die beiden Lichtmodule in die gleiche Richtung verschwenkt werden.

Die Erfindung erlaubt insbesondere die gemeinsame, gleichzeitige Verstellung von zwei Lichtmodulen einer Beleuchtungseinrichtung, wobei die Verstelleinrichtung und die Lichtmodule platzsparend angeordnet werden können.

Vorzugsweise ist vorgesehen, dass jede Verstellwelle über eine Koppeleinrichtung, entweder direkt am jeweiligen Lichtmodul oder an einem Träger, an welchem das jeweilige Lichtmodul gelagert ist, angreift.

Es kann vorgesehen sein, dass die beiden Koppeleinrichtungen, insbesondere in horizontaler Richtung gesehen, zwischen den beiden Lichtmodulen oder zwischen den beiden Verschwenkachsen liegen.

Die Lichtmodule und/oder die Verschwenkachsen der Lichtmodule liegen somit seitlich außerhalb der beiden Koppeleinrichtungen, wobei ein Lichtmodul auf einer Seite (z.B. links oder rechts) und das andere Lichtmodul auf der anderen Seite (z.B. rechts oder links) der beiden Koppeleinrichtungen liegt.

Weiters kann vorgesehen sein, dass die Koppeleinrichtungen jeweils auf der Längsachse ihrer Verstellwelle liegen.

Vorzugsweise liegen die Koppeleinrichtungen in vertikaler Richtung auf gleicher Höhe, wobei vorzugsweise die Längsachsen der Verstellwellen horizontal verlaufen, sodass vorzugsweise die Längsachsen der Verstellwellen in einer gemeinsamen Horizontalebene liegen.

Diese Angaben beziehen sich typischer Weise auf eine Verstelleinrichtung in Einbaulage in einem Kraftfahrzeug.

Insbesondere ist vorgesehen, dass die Längsachsen der Verstellwellen parallel zueinander verlaufen.

Vorzugsweise ist das Kegelrad um eine Drehachse verdrehbar ist, wobei die Drehachse - in Einbaulage - vertikal verläuft und/oder orthogonal zu einer oder zu beiden Längsachsen der Verstellwelle(n) verläuft.

Insbesondere kann vorgesehen sein, dass das erste Tellerrad mit der ersten Verstellwelle und das zweite Tellerrad mit der zweiten Verstellwelle jeweils derart gekoppelt ist, dass sich jede Verstellwelle in Bezug auf ihr Drehelement entlang ihrer Längsachse frei bewegen kann.

Die beiden ersten Drehelemente, die als Tellerräder ausgebildet sind, sind dabei vorzugsweise an einer festen Position, d.h. unverschieblich, insbesondere in Bezug auf ein Gehäuse, z.B. das Gehäuse der Beleuchtungsvorrichtung, angeordnet und können sich "lediglich" drehen.

Insbesondere ist vorgesehen, dass die beiden Verschwenkachsen - in Einbaulage der Beleuchtungsvorrichtung - vertikal verlaufen.

Um diese vertikalen Verschwenkachsen können die Lichtmodule in horizontaler Richtung, d.h. nach links und rechts, verschwenkt werden.

Weiters kann vorgesehen sein, dass jede Verschwenkachse eines Lichtmoduls orthogonal zu der Längsachse der dem Lichtmodul zugeordneten Verstellwelle verläuft.

Häufig ist vorgesehen, dass die Lichtmodule zur Leuchtweiteneinstellung, insbesondere zur dynamischen Leuchtweiteneinstellung, um eine - in Einbaulage - horizontale, quer zu den Verschwenkachsen verlaufende Vertikal-Verschwenkachse verschwenkbar sind.

In diesem Fall kann es günstig sein, wenn die Koppeleinrichtungen bzw. die jeweiligen Koppelpunkte der Koppeleinrichtungen
- in der Vertikal-Verschwenkachse liegen, oder
- in einer Horizontalebene, welche die Vertikal-Verschwenkachse enthält, liegen.

Die Verschwenkachsen verlaufen somit vorzugsweise orthogonal zu dieser Vertikal-Verschwenkachse.

Weiters kann vorgesehen sein, dass die Beleuchtungsvorrichtung ein Gehäuse aufweist, in welchem die Lichtmodule angeordnet und in Bezug auf das Gehäuse verschwenkbar angeordnet sind, und wobei die Verstelleinrichtung derart in dem Gehäuse angeordnet ist, dass das erste und das zweite Tellerrad, und vorzugsweise auch das Kegelrad, in Bezug auf das Gehäuse ortsfest, aber drehbar angeordnet sind.

Die Beleuchtungsvorrichtung ist beispielsweise Bestandteil eines Kraftfahrzeugscheinwerfers oder sie ist als Kraftfahrzeugscheinwerfer ausgebildet.

Im Folgenden ist die Erfindung an Hand der nicht einschränkenden Zeichnungen näher erläutert. In dieser zeigt
Fig. 1 eine erfindungsgemäße Beleuchtungseinrichtung in Form eines Kraftfahrzeugscheinwerfers in einer perspektivischen, schematischen Darstellung von schräg vorne,
Fig. 2 eine Ansicht auf die rein schematisch dargestellte erfindungsgemäße Beleuchtungsvorrichtung von Vorne,
Fig. 3 eine erfindungsgemäße Verstelleinrichtung für die Beleuchtungsvorrichtung aus Figur 1 bzw. 2,
Fig. 4 einen Teil der Verstelleinrichtung aus Figur 3, und
Fig. 5 den in Figur 4 dargestellten Teil der Verstelleinrichtung in auseinandergenommenem Zustand.

Die Figuren beschreiben die Erfindung an Hand eines konkreten Beispiels. Die im Zusammenhang mit der Verstellung der Lichtmodule im Folgenden getroffenen Aussagen gelten aber nicht nur im konkreten Zusammenhang, sondern sind allgemein gültig und nicht auf die konkrete Ausführungsform beschränkt.

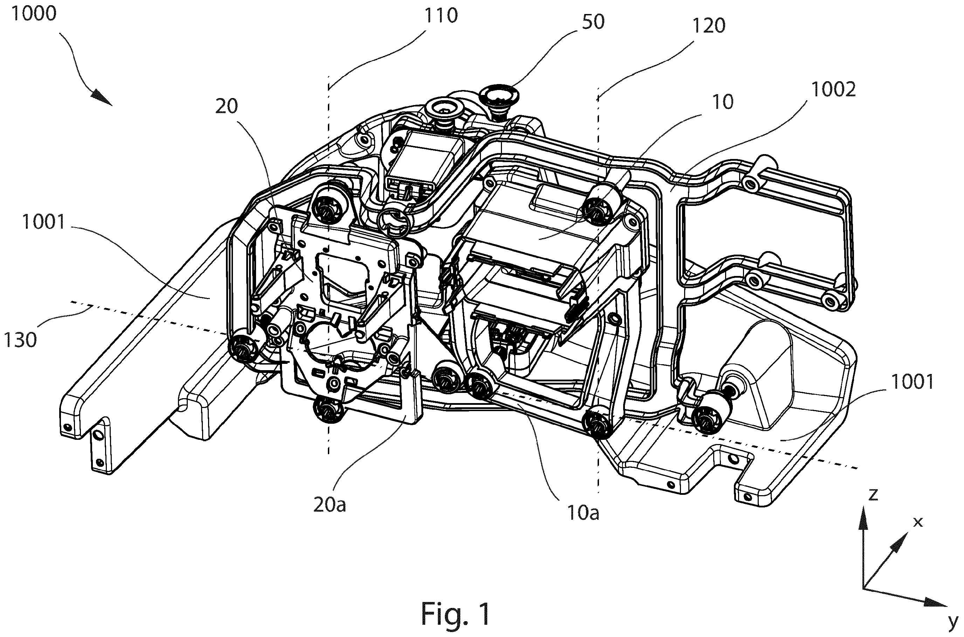

**Figur 1** zeigt eine Beleuchtungsvorrichtung 1000, hier in Form eines Kraftfahrzeugscheinwerfers, in einer aufgeschnittenen Teilansicht von schräg Vorne. Die Beleuchtungsvorrichtung 1000 umfasst ein Gehäuse 1001.

In dem Gehäuse 1001 sind zwei Lichtmodule 10, 20 (in den Figuren lediglich angedeutet dargestellt bzw. durch Bezugszeichenlinie angedeutet) angeordnet. Die beiden Lichtmodule 10, 20 sind dabei um jeweils eine Verschwenkachse 110, 120 verschwenkbar, sodass die Richtung des von den Lichtmodulen 10, 20 emittierten Lichtbündels seitlich (d.h. nach links bzw. rechts) eingestellt werden kann.

Im konkreten Beispiel erzeugt das äußere Lichtmodul 20 eine Vorfeldlichtverteilung und einen Fernlichtspot, das innere Lichtmodul 10 erzeugt eine asymmetrische Abblendlichtverteilung und eine segmentierte Fernlichtverteilung.

Im konkreten Beispiel sind dabei die Lichtmodule 10, 20 jeweils fest in einem Träger 10a, 20a montiert, und der Träger 10a, 20a ist um die jeweilige Verschwenkachse 110, 120 verschwenkbar.

Die Verschwenkachsen 110, 120 sind vorzugsweise parallel und typischer Weise verlaufen die Verschwenkachsen 110, 120 in Einbaulage der Beleuchtungsvorrichtung vertikal, wobei eine Abweichung um wenige Grade von dieser Ausrichtung, wie dem Fachmann klar ist, auftreten kann. Grundsätzlich können die Lichtmodule bzw. deren Träger direkt in Bezug auf das Gehäuse 1001 der Beleuchtungsvorrichtung 1000 verschwenkbar sein, oder sie sind, wie in dem vorliegenden Beispiel, wiederum an einem gemeinsamen Träger 1002 angebracht und in Bezug auf diesen gemeinsamen Träger 1002 verschwenkbar. Dieser Träger 1002 wiederum kann um eine horizontale Verschwenkachse 130 verschenkbar sein, sodass die Lichtmodule 10, 20 gemeinsam in vertikaler Richtung, d.h. auf und ab, zur Einstellung ihrer Leuchtweite verschwenkt werden können.

In einer "Nulllage" des gemeinsamen Trägers 1002 sind die vertikalen Verschwenkachsen beispielsweise vertikal, wie oben beschrieben, bei verschwenkter Position des Trägers 1002 verlaufen die Verschwenkachse 110, 120 klarer Weise nicht mehr vertikal, sondern sind aus dieser Lage geringfügig ausgelenkt.

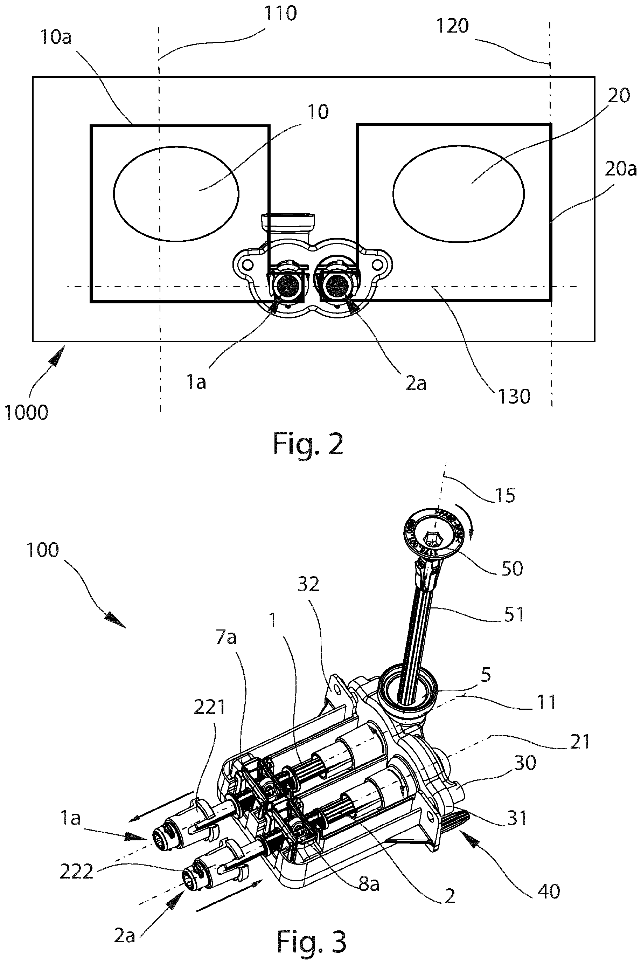

Während **Figur 1** einen perspektivischen Blick auf die Beleuchtungsvorrichtung 1000 in etwa in Richtung x - die Richtung -x ist dabei in etwa die Richtung der Licht-Hauptausbreitungsrichtung - zeigt, zeigt **Figur 2** einen Blick auf die Beleuchtungsvorrichtung 1000 in Richtung x, wobei in **Figur 2** die Beleuchtungsvorrichtung 1000 lediglich schematisch dargestellt ist.

In weiterer Folge wird an Hand von **Figur 2** zusammen mit den **Figuren 3 - 5** die Funktionsweise der vorliegenden Erfindung näher beschrieben.

Die **Figuren 3 - 5** zeigen dabei im Detail eine erfindungsgemäße Verstelleinrichtung 100 zur gleichzeitigen Verstellung der beiden, d.h. des ersten und des zweiten Lichtmoduls 10, 20.

Die Verstelleinrichtung 100 umfasst eine erste Verstellwelle 1, welche mit dem ersten Lichtmodul 10 gekoppelt ist, sowie eine zweite Verstellwelle 2, welche mit dem zweiten Lichtmodul 20 gekoppelt ist.

Die Verstelleinrichtung 100 weist ein Verstelleinrichtungs-Gehäuse 40 auf, welches in dem gezeigten Beispiel aus mehreren Gehäuseelementen 30, 31, 32 gebildet ist. Über dieses Verstelleinrichtungs-Gehäuse 40 ist die Verstelleinrichtung 100 mit dem Gehäuse 1001 der Beleuchtungsvorrichtung 1000 fix verbunden. Das Verstelleinrichtungs-Gehäuse 40 wird dabei mittels des Gehäuseelementes 32 mit dem Gehäuse 1001 verbunden, beispielsweise verschraubt.

In dem Verstelleinrichtungs-Gehäuse 40 sind, wie in **Figur 3** zu erkennen, die erste Verstellwelle 1 und die zweite Verstellwelle 2 um ihre jeweilige Längsachse 11, 21 verdrehbar gelagert. Weiters sind die Verstellwellen 1, 2 jeweils derart gelagert, dass bei einem Verdrehen einer Verstellwelle 1, 2 sich diese linear in Richtung ihrer Längsachse 11, 21 bewegt.

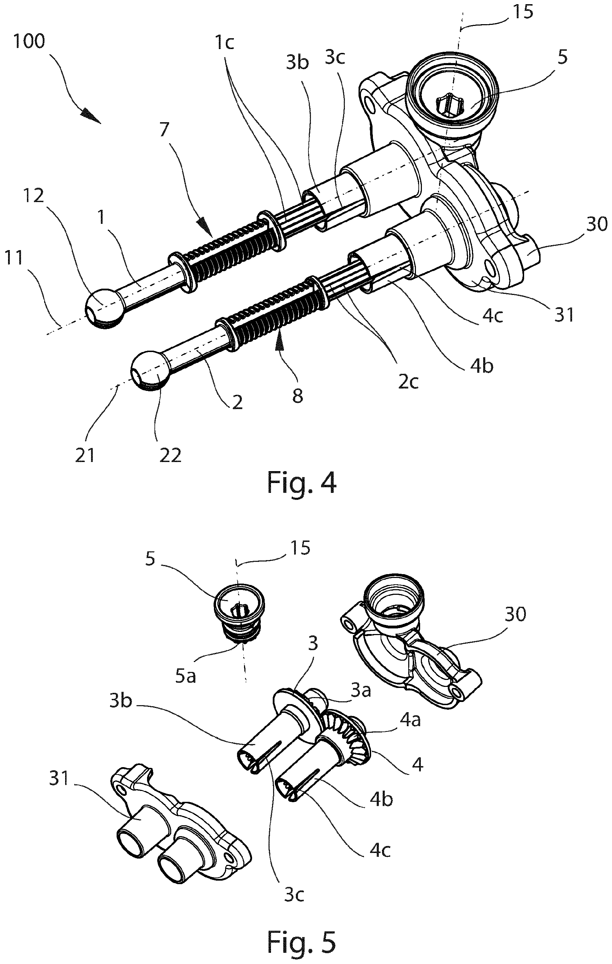

Wie in **Figur 3** **und** **Figur 4** zu erkennen ist, weist für eine entsprechende Lagerung beispielsweise jede Verstellwelle 1, 2 einen Gewindeabschnitt 7, 8 auf, welcher mit einem Gegengewinde 7a, 8a an dem Gehäuseteil 32 des Verstelleinrichtungs-Gehäuses 40 derart zusammenwirkt, dass bei einem Verdrehen der jeweiligen Verstellwelle 1, 2 sich diese in Bezug auf das Verstelleinrichtungs-Gehäuse 40 in Richtung ihrer Längsachse 11, 21, je nach Drehrichtung, vor oder zurück, linear verschiebt.

Weiters umfasst die Verstelleinrichtung 100 ein erstes Drehelement, welches als Tellerrad 3 ausgebildet ist **(****Figur 5****),** und die erste Verstellwelle 1 ist mit dem ersten Tellerrad 3 drehfest verbunden, sodass bei einer Drehung des ersten Tellerrades 3 die Verstellwelle 1 in Drehrichtung des Drehelementes 3 verdreht wird.

Weiters ist ein zweites Drehelement, ebenfalls als (zweites) Tellerrad 4 ausgebildet, vorgesehen, welches analog mit der zweiten Verstellwelle 2 zusammenwirkt.

Die beiden Tellerräder 3, 4 sind in den Gehäuseteilen 30, 31 drehbar aber unverschieblich gelagert **(****Figur 5****).** Weiters sind erstes und zweites Tellerrad 3, 4 in dem gezeigten Beispiel jeweils mit einer Hülse 3b, 4b fix verbunden oder einstückig mit dieser ausgebildet. Die Verstellwellen 1, 2 sind in diese Hülsen 3b, 4b eingeschoben und können sich in den Hülsen in Längsrichtung in Bezug auf diese und somit in Bezug auf die Tellerräder 3, 4 in Längsrichtung bewegen, also in Längsrichtung verschoben werden.

Dazu ist, wie in **Figur 4** beispielhaft gezeigt, zwischen Verstellwelle 1, 2 und zugeordneter Hülse 3b, 4b jeweils eine Mitnahmevorrichtung vorgesehen, z.B. ein oder mehrere in Längsrichtung der Verstellwelle 1, 2 verlaufende Vorsprünge 1c, 2c, welche in korrespondierende, gleichgerichtet verlaufende Vertiefungen 3c, 4c in den Hülsen 3b, 4b eingreifen, sodass bei einer Drehung des Tellerrades 3, 4 und somit der Hülse 3b, 4b auch die Verstellwelle 1, 2 mit verdreht wird, sich gleichzeitig aber in Längsrichtung bewegen kann.

Die Vorsprünge können umgekehrt auch im Inneren der Hülse vorgesehen sein und die Vertiefungen an der Verstellwelle, oder es können auch Vertiefungen und Vorsprünge an der Verstellwelle und korrespondierende Vorsprünge und Vertiefungen in der Hülse vorgesehen sein.

Die Vertiefungen gemeinsam mit den in sie eingreifenden Vorsprüngen können vorzugsweise auch eine Überdrehsicherung bilden.

Weiters ist ein drittes Drehelement, welches als Kegelrad 5 ausgebildet ist, vorgesehen. Dieses Kegelrad 5 ist in dem gezeigten Beispiel in dem Gehäuseteil 30 drehbar gelagert.

Das Kegelrad 5 wirkt mit dem ersten Tellerrad 3 derart zusammen, dass bei einem Drehen des Kegelrades 5 das erste Drehelement 3 verdreht wird. Das erste Tellerrad 3 und das zweite Tellerrad 4 wiederum wirken derart zusammen, dass bei einer Drehung des ersten Tellerrades 3 das zweite Tellerrad 4 gegenläufig zu der Drehrichtung des ersten Tellerrades 3 verdreht wird.

Die Räder 3, 4, 5 verfügen dazu über entsprechende Verzahnungen 3a, 4a, 5a, die ineinandergreifen, sodass diese wie oben beschrieben zusammenwirken.

Somit werden in Folge einer Drehung des Kegelrades 5 die beiden Tellerräder 3, 4 gleichzeitig und gegenläufig zueinander verdreht, wodurch sich die Verstellwellen 1, 2 entlang ihrer jeweiligen Längsachse 11, 21, in entgegengesetzter Richtung, linear bewegen.

Vorzugsweise sind Gewinde/Gegengewinde für beide Verstellwellen gleichläufig zueinander ausgebildet, sodass sich die Verstellwellen (die sich gegenläufig drehen) gegenläufig, also in unterschiedliche Richtung, linear bewegen.

Die Gewindesteigungen für die beiden Verstellwellen können identisch sein, sodass sich die Verstellwellen im selben Ausmaß linear bewegen. Wenn der Normalabstand der Koppelstelle 1a der ersten Verstellwelle 1 zu der Verschwenkachse 110 ihres Lichtmoduls 10 ident zum Normalabstand der Koppelstelle 2a der zweiten Verstellwelle 2 zu der zweiten Verschwenkachse 120 ist, werden in diesem Fall die beiden Lichtmodule um denselben Winkelbetrag verschwenkt.

Die Gewindesteigungen können aber auch variieren. In diesem Fall müssen die Normalabstände nicht ident sein und können flexibel gewählt werden in Abstimmung mit den Gewindesteigungen, um eine Verschwenkung der Lichtmodule um denselben Verschwenkwinkel(betrag) zu erreichen.

Die beschriebenen Zusammenhänge können auch genutzt werden, um unterschiedlich große Verstellwinkel zu realisieren.

Die Tellerräder weisen vorzugsweise identischen Durchmesser auf, können aber auch unterschiedlichen Durchmesser aufweisen, sodass sich die Tellerräder unterschiedlich weit drehen.

Das Kegelrad 5, das sich typischer Weise innerhalb des Gehäuse 1001 der Beleuchtungsvorrichtung 1000 befindet, kann von Außen, insbesondere manuell, durch Drehen eines Einstellelementes 50 **(****Figur 1****,** **Figur 3****),** etwa einer Drehschraube, die aus dem Gehäuse 1001 ragt, mit diesem bündig abschließt oder über eine Gehäuseöffnung leicht zugänglich ist, z.B. mit einem Werkzeug, wie einem Schraubendreher, verdreht werden. Das Einstellelement 50 ist dabei im konkreten Beispiel mit einer Drehstange 51 mit dem Kegelrad 5 verbunden.

Damit bei gegenläufiger Bewegung der Verstellwellen 1, 2 die Lichtmodule 10, 20 in die gleiche Richtung verschwenkt werden, sind die Verschwenkachsen 110, 120 entsprechend angeordnet, wie dies im Folgenden noch näher erläutert wird.

Jede Verstellwelle 1, 2 ist über eine Koppeleinrichtung 1a, 2a, entweder direkt mit dem jeweiligen Lichtmodul oder in dem gezeigten Beispiel mit jeweiligen Träger 10a, 20a, an welchem das Lichtmodul 10, 20 gelagert ist, verbunden. Die Koppeleinrichtung 1a, 2a umfasst dabei z.B. einen Kugelkopf 12, 22 am Ende der Verstellwelle 1, 2, welche Kugelköpfe 12, 22 in korrespondierende Kugelpfannen 221, 222, welche mit dem Lichtmodul 10, 20 bzw. dem Träger 10a, 20a vorzugsweise fest verbunden sind, eingreifen. Somit entsteht eine gelenkige Verbindung zwischen Verstellwelle und Lichtmodul/Träger.

Die beiden Koppeleinrichtungen 1a, 2a, liegen nun zwischen den beiden Lichtmodulen 10, 20 bzw. deren Trägern 10a, 20a **(****Figur 2****)** oder insbesondere zwischen den beiden Verschwenkachsen 110, 120.

Die Lichtmodule und/oder die Verschwenkachsen der Lichtmodule liegen somit seitlich außerhalb der beiden Koppeleinrichtungen, wobei ein Lichtmodul auf einer Seite (z.B. links oder rechts) und das andere Lichtmodul auf der anderen Seite (z.B. rechts oder links) der beiden Koppeleinrichtungen liegt.

Damit ist sichergestellt, dass die beiden Lichtmodule in die gleiche Richtung verschwenkt werden, obwohl die Verstellwellen sich in entgegengesetzte Richtung bewegen.

Wie weiters **Figur 2 und Figur 3** noch zu entnehmen ist, kann vorgesehen sein, dass die Koppeleinrichtungen 1a, 2a jeweils auf der Längsachse 11, 21 ihrer Verstellwelle 1, 2 liegen, und dass die Koppeleinrichtungen 1a, 2a in vertikaler Richtung (auf/ab) auf gleicher Höhe liegen, wobei vorzugsweise die Längsachsen 11, 21 der Verstellwellen 1, 2 horizontal verlaufen, sodass vorzugsweise die Längsachsen 11, 21 der Verstellwellen 1, 2 in einer gemeinsamen Horizontalebene liegen (unter der Voraussetzung, dass die Verschwenkachse 110, 120 tatsächlich vertikal verlaufen, wobei es davon wie weiter oben erläutert Abweichungen geben kann, z.B. wenn der gemeinsame Träger 102 um seine Horizontalachse 130 verschwenkt ist).

Wenn die beiden Verstellwellen 1, 2, die zugeordneten Drehelemente 3, 4 samt zugehörigen Teilen wie Hülsen, und auch die Gewinde sowie Gegengewinde identisch aufgebaut sind, kann die Bauteilvielfalt reduziert werden.

Insbesondere ist es vorteilhaft, wenn die Längsachsen 11, 21 der Verstellwellen 1, 2 wie gezeigt parallel zueinander verlaufen.

Das Kegelrad 5 ist um eine Drehachse 15 verdrehbar, wobei vorzugsweise die Drehachse 15 - in Einbaulage - vertikal verläuft und/oder orthogonal zu einer oder zu beiden Längsachsen 11, 21 der Verstellwelle(n) 1, 2 verläuft.

Insbesondere kann vorgesehen sein, dass die Verschwenkachsen 110, 120 der Lichtmodule 10, 20 orthogonal zu der Längsachse 11, 21 der dem Lichtmodul 10, 20 zugeordneten Verstellwelle 1, 2 verlaufen.

Vorzugsweise liegen die Koppeleinrichtungen 1a, 2a bzw. die jeweiligen Koppelpunkte der Koppeleinrichtungen 1a, 2a in der horizontalen Vertikal-Verschwenkachse 130 des Trägers 1002 oder in einer Horizontalebene, welche die Vertikal-Verschwenkachse 130 enthält.

Bei der beschriebenen und gezeigten Ausführungsform sind die Angriffspunkte der Koppelelemente mittig zwischen den beiden Lichtmodulen angeordnet. Eine Verschwenkachse 110 verläuft durch das Lichtmodul 10, die andere Verschwenkachse 120 am äußeren Rand des Lichtmodules 20 (bzw. deren Trägern).

## Patentansprüche

1. Beleuchtungsvorrichtung (1000), insbesondere Kraftfahrzeugscheinwerfer, für ein Kraftfahrzeug, die Beleuchtungsvorrichtung umfassend ein erstes und ein zweites Lichtmodul (10, 20), wobei das erste Lichtmodul (10) um eine erste Verschwenkachse (110) und das zweite Lichtmodul (20) um eine zweite Verschwenkachse (120) verschwenkbar gelagert ist, wobei die Beleuchtungsvorrichtung weiters eine Verstelleinrichtung (100) zur gleichzeitigen Verstellung des ersten und des zweiten Lichtmoduls (10, 20) umfasst, wobei die beiden Verschwenkachsen (110, 120) parallel zueinander verlaufen, wobei die Verstelleinrichtung (100) umfasst:
- eine erste Verstellwelle (1), welche mit dem ersten Lichtmodul (10) gekoppelt ist,
- eine zweite Verstellwelle (2), welche mit dem zweiten Lichtmodul (20) gekoppelt ist,
wobei die erste Verstellwelle (1) und die zweite Verstellwelle (2) um ihre jeweilige Längsachse (11, 21) verdrehbar gelagert sind,
wobei die erste Verstellwelle (1) mit einem ersten Drehelement (3), welches als Tellerrad ausgebildet ist, drehfest verbunden ist, sodass bei einer Drehung des ersten Tellerrades (3) die Verstellwelle (1) in Drehrichtung des ersten Tellerrades (3) verdreht wird,
wobei die zweite Verstellwelle (2) mit einem zweiten Drehelement (4), welches als Tellerrad ausgebildet ist, drehfest verbunden ist, sodass bei einer Drehung des zweiten Tellerrades (4) die zweite Verstellwelle (4) in Drehrichtung des zweiten Tellerrades (4) verdreht wird,
wobei ein drittes Drehelement (5), welches als Kegelrad ausgebildet ist, vorgesehen ist,
wobei
die Tellerräder (3, 4) und das Kegelrad (5) Verzahnungen (3a, 4a, 5a) aufweisen,
und wobei die Verzahnung (5a) des Kegelrades (5) und die Verzahnung (3a) des ersten Tellerrades (3a) ineinandergreifen, sodass bei einem Drehen des Kegelrades (5) das erste Tellerrad (3) verdreht wird,
**dadurch gekennzeichnet,**
**dass** die Verstellwellen (1, 2) jeweils derart gelagert sind, dass bei einem Verdrehen einer Verstellwelle (1, 2) sich diese linear in Richtung ihrer Längsachse (11, 21) bewegt,
**dass** die Verzahnung (3a) des ersten Tellerrades (3) und die Verzahnung (4a) des zweiten Tellerrades (4) ineinandergreifen, sodass bei einer Drehung des ersten Tellerrades (3) das zweite Tellerrad (4) gegenläufig zu der Drehrichtung des ersten Tellerrades (3) verdreht wird, und dass
die erste und die zweite Verstellwelle (1, 2) derart gelagert sind, dass sie in Folge der durch die Drehung des Kegelrades (5) bewirkten Drehungen des ersten und zweiten Tellerrades (3, 4) sich entlang ihrer jeweiligen Längsachse (11, 21), in entgegengesetzter Richtung, linear bewegen, wobei die Verschwenkachsen (110, 120) derart verlaufen, dass die beiden Lichtmodule (10, 20) gleichzeitig um ihre jeweilige Verschwenkachse (110, 120) und in die gleiche Richtung verschwenkt werden.

2. Beleuchtungsvorrichtung nach Anspruch 1, wobei jede Verstellwelle (1, 2) über eine Koppeleinrichtung (1a, 2a), entweder direkt am jeweiligen Lichtmodul oder an einem Träger (10a, 20a), an welchem das jeweilige Lichtmodul (10, 20) gelagert ist, angreift.

3. Beleuchtungsvorrichtung nach Anspruch 2, wobei die beiden Koppeleinrichtungen (1a, 2a), insbesondere in horizontaler Richtung gesehen, zwischen den beiden Lichtmodulen (10, 20) oder zwischen den beiden Verschwenkachsen (110, 120) liegen.

4. Beleuchtungsvorrichtung nach Anspruch 2 oder 3, wobei die Koppeleinrichtungen (1a, 2a) jeweils auf der Längsachse (11, 21) ihrer Verstellwelle (1, 2) liegen.

5. Beleuchtungsvorrichtung nach einem der Ansprüche 2 bis 4, wobei die Koppeleinrichtungen (1a, 2a) in vertikaler Richtung auf gleicher Höhe liegen, wobei vorzugsweise die Längsachsen (11, 21) der Verstellwellen (1, 2) horizontal verlaufen, sodass vorzugsweise die Längsachsen (11, 21) der Verstellwellen (1, 2) in einer gemeinsamen Horizontalebene liegen.

6. Beleuchtungsvorrichtung nach einem der Ansprüche 1 bis 5, wobei die Längsachsen (11, 21) der Verstellwellen (1, 2) parallel zueinander verlaufen.

7. Beleuchtungsvorrichtung nach einem der Ansprüche 1 bis 6, wobei das Kegelrad (5) um eine Drehachse (15) verdrehbar ist, wobei die Drehachse (15) - in Einbaulage - vertikal verläuft und/oder orthogonal zu einer oder zu beiden Längsachsen (11, 21) der Verstellwelle(n) (1, 2) verläuft.

8. Beleuchtungsvorrichtung nach einem der Ansprüche 1 bis 7, wobei das erste Tellerrad (3) mit der ersten Verstellwelle (1) und das zweite Tellerrad (4) mit der zweiten Verstellwelle (2) jeweils derart gekoppelt ist, dass sich jede Verstellwelle (1, 2) in Bezug auf ihr Tellerrad (3, 4) entlang ihrer Längsachse frei bewegen kann.

9. Beleuchtungsvorrichtung nach einem der vorhergehenden Ansprüche, wobei die beiden Verschwenkachsen (110, 120) - in Einbaulage der Beleuchtungsvorrichtung - vertikal verlaufen.

10. Beleuchtungsvorrichtung nach einem der vorhergehenden Ansprüche, wobei jede Verschwenkachse (110, 120) eines Lichtmoduls (10, 20) orthogonal zu der Längsachse (11, 21) der dem Lichtmodul (10, 20) zugeordneten Verstellwelle (1, 2) verläuft.

11. Beleuchtungsvorrichtung nach einem der vorhergehenden Ansprüche, wobei die Lichtmodule (10, 20) zur Leuchtweiteneinstellung, insbesondere zur dynamischen Leuchtweiteneinstellung, um eine - in Einbaulage - horizontale, quer zu den Verschwenkachsen verlaufende Vertikal-Verschwenkachse (130) verschwenkbar sind.

12. Beleuchtungsvorrichtung nach Anspruch 11, wobei die Koppeleinrichtungen (1a, 2a) bzw. der jeweilige Koppelpunkt der Koppeleinrichtungen (1a, 2a)
• in der Vertikal-Verschwenkachse (130) liegen, oder
• in einer Horizontalebene, welche die Vertikal-Verschwenkachse (130) enthält, liegen.

13. Beleuchtungsvorrichtung nach einem der vorhergehenden Ansprüche, wobei die Beleuchtungsvorrichtung (1000) ein Gehäuse (1001) aufweist, in welchem die Lichtmodule (10, 20) angeordnet und in Bezug auf das Gehäuse (1001) verschwenkbar angeordnet sind, und wobei die Verstelleinrichtung (100) derart in dem Gehäuse (1001) angeordnet ist, dass das erste und das zweite Tellerrad (3, 4), und vorzugsweise auch das Kegelrad (5), in Bezug auf der Gehäuse ortsfest, aber drehbar angeordnet sind.

14. Beleuchtungsvorrichtung nach einem der vorhergehenden Ansprüche, wobei die Beleuchtungsvorrichtung Bestandteil eines Kraftfahrzeugscheinwerfers oder als Kraftfahrzeugscheinwerfer ausgebildet ist.

## Claims

1. Lighting device (1000), in particular motor vehicle headlamp, for a motor vehicle, the lighting device comprising a first and a second light module (10, 20), the first light module (10) being mounted so as to be pivotable about a first pivot axis (110) and the second light module (20) being mounted so as to be pivotable about a second pivot axis (120), the lighting device further comprising an adjusting device (100) for simultaneously adjusting the first and the second light module (10, 20)
wherein the two pivot axes (110, 120) extend parallel to one another,
wherein the adjusting device (100) comprises
- a first adjustment shaft (1), which is coupled to the first light module (10),
- a second adjustment shaft (2), which is coupled to the second light module (20),
wherein the first adjustment shaft (1) and the second adjustment shaft (2) are mounted so as to be rotatable about their respective longitudinal axes (11, 21),
wherein the first adjustment shaft (1) is non-rotatably connected to a first rotary element (3), which is designed as a ring gear, so that when the first ring gear (3) is rotated, the adjustment shaft (1) is rotated in the direction of rotation of the first ring gear (3),
wherein the second adjustment shaft (2) is non-rotatably connected to a second rotary element (4), which is designed as a ring gear, so that when the second ring gear (4) is rotated, the second adjustment shaft (4) is rotated in the direction of rotation of the second ring gear (4),
wherein a third rotary element (5), which is designed as a bevel gear, is provided, wherein
the ring gears (3, 4) and the bevel gear (5) have toothing (3a, 4a, 5a),
and wherein the toothing (5a) of the bevel gear (5) and the toothing (3a) of the first ring gear (3a) mesh with one another so that the first ring gear (3) is rotated when the bevel gear (5) is rotated, **characterized in**
**in that** the adjusting shafts (1, 2) are each mounted in such a way that, when an adjusting shaft (1, 2) is rotated, it moves linearly in the direction of its longitudinal axis (11, 21), **in that**
the toothing (3a) of the first ring gear (3) and the toothing (4a) of the second ring gear (4) mesh with one another, so that when the first ring gear (3) is rotated, the second ring gear (4) is rotated in the opposite direction to the direction of rotation of the first ring gear (3), and that the first and second adjustment shafts (1, 2) are mounted such that they move linearly along their respective longitudinal axes (11, 21) in opposite directions as a result of the rotations of the first and second ring gears (3, 4) caused by the rotation of the bevel gear (5), the pivot axes (110, 120) extending such that the two light modules (10, 20) are pivoted simultaneously about their respective pivot axes (110, 120) and in the same direction.

2. Lighting device according to claim 1, wherein each adjustment shaft (1, 2) engages via a coupling device (1a, 2a), either directly on the respective light module or on a carrier (10a, 20a) on which the respective light module (10, 20) is mounted.

3. Lighting device according to claim 2, wherein the two coupling devices (1a, 2a), in particular viewed in the horizontal direction, lie between the two light modules (10, 20) or between the two pivot axes (110, 120).

4. Lighting device according to claim 2 or 3, wherein the coupling devices (1a, 2a) each lie on the longitudinal axis (11, 21) of their adjustment shaft (1, 2).

5. Lighting device according to one of claims 2 to 4, wherein the coupling devices (1a, 2a) lie at the same height in the vertical direction, wherein preferably the longitudinal axes (11, 21) of the adjusting shafts (1, 2) run horizontally, so that preferably the longitudinal axes (11, 21) of the adjusting shafts (1, 2) lie in a common horizontal plane.

6. Lighting device according to one of claims 1 to 5, wherein the longitudinal axes (11, 21) of the adjustment shafts (1, 2) run parallel to each other.

7. Lighting device according to one of claims 1 to 6, wherein the bevel gear (5) is rotatable about an axis of rotation (15), wherein the axis of rotation (15) - in the installed position - extends vertically and/or extends orthogonally to one or both longitudinal axes (11, 21) of the adjustment shaft(s) (1, 2).

8. Lighting device according to one of claims 1 to 7, wherein the first disk wheel (3) is coupled to the first adjustment shaft (1) and the second disk wheel (4) is coupled to the second adjustment shaft (2) in such a way that each adjustment shaft (1, 2) can move freely along its longitudinal axis in relation to its disk wheel (3, 4).

9. Lighting device according to one of the preceding claims, wherein the two pivot axes (110, 120) - in the installed position of the lighting device - extend vertically.

10. Lighting device according to one of the preceding claims, wherein each pivot axis (110, 120) of a light module (10, 20) extends orthogonally to the longitudinal axis (11, 21) of the adjustment shaft (1, 2) associated with the light module (10, 20).

11. Lighting device according to one of the preceding claims, wherein the light modules (10, 20) for headlight range adjustment, in particular for dynamic headlight range adjustment, are pivotable about a vertical pivot axis (130) which is horizontal in the installed position and extends transversely to the pivot axes.

12. Lighting device according to claim 11, wherein the coupling devices (1a, 2a) or the respective coupling point of the coupling devices (1a, 2a)
- lie in the vertical swivel axis (130), or
- lie in a horizontal plane which contains the vertical swivel axis (130).

13. Lighting device according to one of the preceding claims, wherein the lighting device (1000) has a housing (1001) in which the light modules (10, 20) are arranged and are arranged pivotably with respect to the housing (1001), and wherein the adjusting device (100) is arranged in the housing (1001) in such a way that the first and the second ring gear (3, 4), and preferably also the bevel gear (5), are arranged in a stationary but rotatable manner with respect to the housing.

14. Lighting device according to one of the preceding claims, wherein the lighting device is a component of a motor vehicle headlamp or is designed as a motor vehicle headlamp.

## Revendications

1. Dispositif d'éclairage (1000), en particulier projecteur de véhicule automobile, pour un véhicule automobile, le dispositif d'éclairage comprenant un premier et un deuxième module d'éclairage (10, 20), le premier module d'éclairage (10) étant monté de manière à pouvoir pivoter autour d'un premier axe de pivotement (110) et le deuxième module d'éclairage (20) étant monté de manière à pouvoir pivoter autour d'un deuxième axe de pivotement (120), le dispositif d'éclairage comprenant en outre un dispositif de réglage (100) pour le réglage simultané du premier et du deuxième module d'éclairage (10, 20),
les deux axes de pivotement (110, 120) étant parallèles entre eux,
le dispositif de réglage (100) comprenant :
- un premier arbre de réglage (1), qui est couplé au premier module d'éclairage (10),
- un deuxième arbre de réglage (2), qui est couplé au deuxième module d'éclairage (20),
le premier arbre de réglage (1) et le deuxième arbre de réglage (2) étant montés de manière à pouvoir tourner autour de leur axe longitudinal respectif (11, 21),
le premier arbre de réglage (1) étant relié solidairement en rotation à un premier élément rotatif (3) qui est réalisé sous la forme d'une couronne dentée, de sorte que lors d'une rotation de la première couronne dentée (3), l'arbre de réglage (1) est tourné dans le sens de rotation de la première couronne dentée (3),
le deuxième arbre de réglage (2) étant relié solidairement en rotation à un deuxième élément rotatif (4), qui est réalisé sous forme de roue à disque, de sorte que, lors d'une rotation de la deuxième roue à disque (4), le deuxième arbre de réglage (4) est tourné dans le sens de rotation de la deuxième roue à disque (4),
un troisième élément rotatif (5), qui est conçu comme une roue conique, étant prévu, dans lequel
les couronnes dentées (3, 4) et la roue conique (5) présentent des dentures (3a, 4a, 5a),
et la denture (5a) de la roue conique (5) et la denture (3a) de la première couronne dentée (3a) s'engrenant l'une dans l'autre, de sorte que lors d'une rotation de la roue conique (5), la première couronne dentée (3) est tordue, **caractérisé,**
**en ce que** les arbres de réglage (1, 2) sont respectivement montés de telle sorte que, lors d'une rotation d'un arbre de réglage (1, 2), celui-ci se déplace linéairement dans la direction de son axe longitudinal (11, 21), en ce que
la denture (3a) de la première couronne (3) et la denture (4a) de la deuxième couronne (4) s'engrènent l'une dans l'autre, de sorte que lors d'une rotation de la première couronne (3), la deuxième couronne (4) est tournée en sens inverse du sens de rotation de la première couronne (3), et que
le premier et le deuxième arbre de réglage (1, 2) sont montés de telle sorte qu'ils se déplacent linéairement le long de leur axe longitudinal respectif (11, 21), dans des directions opposées, à la suite des rotations de la première et de la deuxième roue à disque (3, 4) provoquées par la rotation de la roue conique (5), les axes de pivotement (110, 120) s'étendant de telle sorte que les deux modules d'éclairage (10, 20) sont pivotés simultanément autour de leur axe de pivotement respectif (110, 120) et dans la même direction.

2. Dispositif d'éclairage selon la revendication 1, dans lequel chaque arbre de réglage (1, 2) s'engage par l'intermédiaire d'un dispositif de couplage (1a, 2a), soit directement sur le module d'éclairage respectif, soit sur un support (10a, 20a) sur lequel le module d'éclairage respectif (10, 20) est logé.

3. Dispositif d'éclairage selon la revendication 2, dans lequel les deux dispositifs de couplage (1a, 2a) sont situés, notamment vus en direction horizontale, entre les deux modules d'éclairage (10, 20) ou entre les deux axes de pivotement (110, 120).

4. Dispositif d'éclairage selon la revendication 2 ou 3, dans lequel les dispositifs de couplage (1a, 2a) se trouvent chacun sur l'axe longitudinal (11, 21) de leur arbre de réglage (1, 2).

5. Dispositif d'éclairage selon l'une des revendications 2 à 4, dans lequel les dispositifs de couplage (1a, 2a) sont situés à la même hauteur dans la direction verticale, de préférence les axes longitudinaux (11, 21) des arbres de réglage (1, 2) étant horizontaux, de sorte que de préférence les axes longitudinaux (11, 21) des arbres de réglage (1, 2) sont situés dans un même plan horizontal.

6. Dispositif d'éclairage selon l'une des revendications 1 à 5, dans lequel les axes longitudinaux (11, 21) des arbres de réglage (1, 2) sont parallèles entre eux.

7. Dispositif d'éclairage selon l'une des revendications 1 à 6, dans lequel la roue conique (5) peut tourner autour d'un axe de rotation (15), l'axe de rotation (15) étant - en position de montage - vertical et/ou orthogonal à l'un ou aux deux axes longitudinaux (11, 21) du ou des arbres de réglage (1, 2).

8. Dispositif d'éclairage selon l'une quelconque des revendications 1 à 7, dans lequel la première couronne (3) est couplée au premier arbre de réglage (1) et la deuxième couronne (4) est couplée au deuxième arbre de réglage (2), respectivement, de sorte que chaque arbre de réglage (1, 2) est libre de se déplacer par rapport à sa couronne (3, 4) le long de son axe longitudinal.

9. Dispositif d'éclairage selon l'une quelconque des revendications précédentes, dans lequel les deux axes de pivotement (110, 120) sont verticaux - en position de montage du dispositif d'éclairage.

10. Dispositif d'éclairage selon l'une des revendications précédentes, dans lequel chaque axe de pivotement (110, 120) d'un module d'éclairage (10, 20) est orthogonal à l'axe longitudinal (11, 21) de l'arbre de réglage (1, 2) associé au module d'éclairage (10, 20).

11. Dispositif d'éclairage selon l'une des revendications précédentes, dans lequel les modules d'éclairage (10, 20) peuvent pivoter pour le réglage de la portée lumineuse, en particulier pour le réglage dynamique de la portée lumineuse, autour d'un axe de pivotement vertical (130) horizontal - en position de montage - qui s'étend transversalement par rapport aux axes de pivotement.

12. Dispositif d'éclairage selon la revendication 11, dans lequel les dispositifs d'accouplement (1a, 2a) ou le point d'accouplement respectif des dispositifs d'accouplement (1a, 2a) sont situés dans l'axe vertical de l'axe optique.
• dans l'axe de pivotement vertical (130), où
• soit dans un plan horizontal contenant l'axe de pivotement vertical (130).

13. Dispositif d'éclairage selon l'une quelconque des revendications précédentes, dans lequel le dispositif d'éclairage (1000) comprend un boîtier (1001) dans lequel les modules d'éclairage (10, 20) sont disposés et sont disposés de manière à pouvoir pivoter par rapport au boîtier (1001), et dans lequel le dispositif de réglage (100) est disposé dans le boîtier (1001) de telle sorte que la première et la deuxième roue à disques (3, 4), et de préférence également la roue conique (5), sont disposées de manière fixe par rapport au boîtier, mais de manière à pouvoir tourner.

14. Dispositif d'éclairage selon l'une quelconque des revendications précédentes, dans lequel le dispositif d'éclairage fait partie d'un projecteur de véhicule automobile ou est conçu comme un projecteur de véhicule automobile.
